# EUROPÄISCHE PATENTANMELDUNG

(11) **EP 4 026 778 A2**
(43) Veröffentlichungstag der Anmeldung: **13.07.2022**
(21) Anmeldenummer: 21215091.6
(22) Anmeldetag: 16.12.2021
(51) Int. Cl.: B65B 5/10, B65B 21/10, B65B 23/00, B07C 5/342, B65B 35/24, B65B 35/58, B65B 39/00, B65B 43/56, B65B 57/14, B65B 59/00, B65B 65/00, B65G 11/02, B65G 11/08, B65G 11/12, B65G 11/16, B65G 11/20, B65G 47/252, B65G 47/44, B65G 47/46

(54) **VERFAHREN UND VORRICHTUNG ZUM VERPACKEN VON HOHLGLÄSERN**

(30) Priorität: 17.12.2020 DE 102020134010
(71) Anmelder: IPROTec GmbH, 94227 Zwiesel (DE)
(72) Erfinder: LESCHE, Klaus, 94259 Kirchberg im Wald (DE)
(74) Vertreter: Müller-Boré & Partner Patentanwälte PartG mbB

(57) **Zusammenfassung**

Die vorliegende Erfindung betrifft ein Verfahren zum Verpacken von Hohlgläsern (10), umfassend die Schritte Bereitstellen einer Verpackung (40), Fördern zumindest eines Hohlglases (10) auf einem Förderband (20) hin zu einem Abwurfende (22) des Förderbandes (20), und gleitendes Führen des zumindest einen Hohlglases (10) durch eine Führungseinrichtung (30) von dem Abwurfende (22) in die Verpackung (40).

## Beschreibung

Die vorliegende Erfindung betrifft ein Verfahren und ein System zum Verpacken von Hohlgläsern, insbesondere Trinkgläsern, insbesondere zum Einführen bzw. Einsortieren besagter Gläser in Transportverpackungen wie Kartonagen.

Herkömmliche Verfahren zum Verpacken von Hohlgläsern werden im Allgemeinen im Anschluss an einen Herstellungsprozess von Hohlgläsern verwendet, wobei Hohlgläser auf einem Förderband zu einem Verpackungssystem gefördert werden. Herkömmliche Verfahren zum Verpacken von Hohlgläsern nutzen dabei einen Roboter, welcher Hohlgläser von dem Förderband hebt und in eine Verpackung einführt bzw. steckt. Der Roboter, welcher bei herkömmlichen Verpackungsverfahren Hohlgläser von einem Förderband hebt und in eine Verpackung einführt verwendet dabei beispielsweise eine Saugvorrichtung, welche dazu dient Hohlgläser beispielsweise am Trinkrand anzusaugen, danach die Hohlgläser anzuheben, um anschließend die Hohlgläser in die Verpackung zu führen. Das vorbeschriebene herkömmliche Verfahren wird dabei wiederholt, bis eine Verpackung mit Hohlgläsern gefüllt ist.

Das vorbeschriebene herkömmliche Verpackungsverfahren weist verschiedene Probleme auf. Durch den Roboter, welcher Hohlgläser schrittweise saugend anhebt, in eine Verpackung führt und anschließend durch Unterbrechung des Saugens die Hohlgläser wieder loslässt, wird eine lange Prozesszeit für die Verpackung von Hohlgläsern verursacht. Weiterhin kann der Roboter, welcher eine Saugvorrichtung aufweist, eine Quelle verschiedenartiger Fehler bzw. Fehlfunktionen sein, welche bei Eintritt eines Fehlers bzw. einer Fehlfunktion das Verpackungsverfahren zusätzlich verzögern.

Es ist daher Aufgabe der vorliegenden Erfindung ein Verfahren zum Verpacken von Hohlgläsern bereitzustellen, welches eine kurze Prozesszeit ermöglicht, insbesondere eine kurze Prozesszeit einer Vielzahl von Hohlgläsern ermöglicht und darüber hinaus verzögernde Fehlerquellen verringert bzw. vermeidet. Somit ist es Aufgabe der vorliegenden Erfindung ein Verfahren zum Verpacken von Hohlgläsern bereitzustellen, welches eine Verbesserung bekannter Verpackungsverfahren ist, und insbesondere für die massenhafte Verpackung von Hohlgläsern geeignet ist.

Die vorbeschriebene Aufgabe wird durch die Gegenstände der unabhängigen Ansprüche gelöst, bevorzugte Ausführungsformen sind Gegenstand der abhängigen Ansprüche.

Ein Aspekt der Erfindung betrifft ein Verfahren zum Verpacken von Hohlgläsern, umfassend die Schritte:
- Bereitstellen einer Verpackung;
- Fördern zumindest eines Hohlglases auf einem Förderband hin zu einem Abwurfende des Förderbandes; und
- gleitendes Führen des zumindest einen Hohlglases durch eine Führungseinrichtung von dem Abwurfende in die Verpackung.

Das vorliegende Verfahren zum Verpacken von Hohlgläsern ermöglicht vorteilhaft, durch das gleitende Führen des zumindest einen Hohlglases von dem Abwurfende des Förderbandes in die Verpackung mittels einer Führungseinrichtung, dass kein Roboter, insbesondere kein Roboter mit einer Saugvorrichtung, zum Verpacken von Hohlgläsern benötigt wird, wodurch Fehlerquellen verringert bzw. vermieden werden können. Weiterhin ermöglicht das vorliegende Verfahren zum Verpacken von Hohlgläsern vorteilhaft, dass Hohlgläser massenhaft nacheinander gleitend in eine Verpackung geführt werden können, wodurch eine besonders kurze Prozesszeit zur Verpackung von Hohlgläsern realisiert werden kann. Somit kann anhand der vorliegenden Erfindung ein verbessertes Verfahren zum Verpacken von Hohlgläsern bereitgestellt werden.

In beispielhaften Ausführungsformen kann die Führungseinrichtung bewegbar sein, wobei nach dem gleitenden Führen des zumindest einen Hohlglases in die Verpackung und vor dem gleitenden Führen weiterer Hohlgläser in die Verpackung die Führungseinrichtung bewegt wird. Insbesondere kann die Führungseinrichtung sowohl senkrecht bzw. quer zur Förderrichtung des Förderbandes bewegbar sein, als auch entlang der Förderrichtung des Förderbandes bewegbar sein.

Durch eine bewegbare Führungseinrichtung wird vorteilhaft ermöglicht eine Vielzahl von Hohlgläsern nacheinander gleitend in eine Verpackung zu führen, wobei eine Verpackung innerhalb kurzer Zeit mit Hohlgläsern gefüllt werden kann.

In weiteren beispielhaften Ausführungsformen kann die Verpackung bewegbar sein, wobei nach dem gleitenden Führen des zumindest einen Hohlglases in die Verpackung und vor dem gleitenden Führen weiterer Hohlgläser in die Verpackung die Verpackung bewegt wird. Insbesondere kann die Verpackung sowohl senkrecht bzw. quer zur Förderrichtung des Förderbandes bewegbar sein, als auch entlang der Förderrichtung des Förderbandes bewegbar sein.

Durch eine bewegbare Verpackung wird vorteilhaft ermöglicht eine Vielzahl von Hohlgläsern nacheinander gleitend in die Verpackung zu führen, wobei die Verpackung innerhalb kurzer Zeit mit Hohlgläsern gefüllt werden kann.

In weiteren beispielhaften Ausführungsformen kann sowohl die Führungseinrichtung bewegbar sein, als auch die Verpackung bewegbar sein. In alternativen Ausführungsformen kann auch weder die Führungseinrichtung bewegbar sein, noch die Verpackung bewegbar sein.

In beispielhaften Ausführungsformen kann die Führungseinrichtung konfiguriert sein eine bestimmte Anzahl von Hohlgläsern nebeneinander gleitend zu führen. Beispielsweise kann die Führungseinrichtung konfiguriert sein 1, 2, 3, 4, 5, 6 oder mehr Hohlgläser nebeneinander gleitend zu führen. Insbesondere kann die Führungseinrichtung mehrere Führungsschienen aufweisen, um das zumindest eine Hohlglas beispielsweise zwischen zwei Führungsschienen gleitend zu führen.

Im weiteren Verlauf werden verschiedene Begriffe wiederholt verwendet, deren Verständnis durch die nachfolgenden Definitionen erleichtert werden soll.

Hohlglas: Der Begriff Hohlglas beschreibt ein Glas, insbesondere ein Glasgefäß, welches einen Hohlraum aufweist, der beispielsweise mit einer oder mehreren Flüssigkeiten oder anderen Stoffen gefüllt oder teilweise befüllt werden kann. Beispiele für Hohlgläser können Trinkgläser, Krüge, Flaschen, Vasen sowie weitere Gläser sein, die einen Hohlraum aufweisen.

Förderrichtung: Die Förderrichtung beschreibt eine Richtung, in der ein Element, welches auf dem Förderband aufliegt, gefördert wird. Die Förderrichtung verläuft in der vorliegenden Erfindung im Wesentlichen parallel zu einer Förderbandoberfläche und zeigt dabei hin zu einem Abwurfende des Förderbandes. Die Förderrichtung bezogen auf das Förderband kann insbesondere im Wesentlichen einer Längsrichtung der Verpackung entsprechen.

Querrichtung: Die Querrichtung beschreibt eine Richtung quer zur Förderrichtung. Mit anderen Worten beschreibt die Querrichtung eine Richtung, welche im Wesentlichen parallel zu einer Förderbandoberfläche und im Wesentlichen senkrecht zur Förderrichtung verläuft. Die Querrichtung bezogen auf das Förderband kann insbesondere im Wesentlichen einer Breitenrichtung der Verpackung entsprechen.

Höhenrichtung: Die Höhenrichtung beschreibt eine Richtung, welche sich von dem Förderband ausgehend im Wesentlichen in die Höhe erstreckt. Die Höhenrichtung kann insbesondere im Wesentlichen senkrecht zur Förderrichtung und zur Querrichtung sein. Förderrichtung, Querrichtung und Höhenrichtung können insbesondere ein Rechtshandsystem bilden.

Gleiten und gleitendes Führen: Die Begriffe Gleiten und gleitendes Führen beziehen sich vorliegend zumeist auf eine Bewegung des Hohlglases. Beim Gleiten oder gleitenden Führen eines Hohlglases bewegt sich das Hohlglas im Wesentlichen aufgrund seiner Gewichtskraft entlang einer Führungseinrichtung bzw. einer Gleitfläche einer Führungseinrichtung. Das Gleiten bzw. das gleitende Führen eines Hohlglases beschreibt somit eine Bewegung des Hohlglases, welche einerseits durch die Gewichtskraft des Hohlglases beeinflusst wird und andererseits durch die Reibung beeinflusst wird, insbesondere durch die Gleitreibung, welche zwischen dem Hohlglas und beispielsweise einer Gleitfläche einer Führungseinrichtung auftritt.

Förderband: Das Förderband wie hierin beschrieben kann insbesondere ein typisches auf Rollen gelagertes Förderband sein, insbesondere ein endloses Förderband sein, insbesondere mit einer durchgängigen, zwischen zwei im Wesentlichen gegenüberliegend angeordneten Umlenkvorrichtungen erstreckenden Förderfläche zur Förderung der Hohlgläser. Darüber hinaus kann das Förderband andere Förderglieder und/oder Förderketten umfassen, welche geeignet sind, Hohlgläser zu fördern. Insbesondere kann das Förderband durch eine Vielzahl an aneinandergereihten Förderrollen gebildet sein, welche konfiguriert sind, Hohlgläser hin zu einer distalen Förderrolle zu fördern, derart, dass die Hohlgläser das Förderband vorzugsweise an bzw. im Bereich der distalen Förderrolle verlassen. Die aneinandergereihten Förderrollen können dabei angetrieben oder zumindest teilweise nicht-angetrieben sein, und können ferner horizontal nebeneinander gereiht angeordnet sein oder eine Neigung oder ein Gefälle bilden.

Dadurch, dass in der vorliegenden Erfindung Hohlgläser gleitend in eine Verpackung geführt werden, kann das vorliegende Verfahren zur Verpackung auf einen Roboter, insbesondere einen saugenden Roboter, verzichten.

In beispielhaften Ausführungsformen des Verfahrens zum Verpacken von Hohlgläsern kann das Verfahren einen Schritt des Kippens des zumindest einen Hohlglases über das Abwurfende des Förderbandes aufweisen. Das Abwurfende des Förderbandes kann dabei insbesondere durch den Ablauf des Förderbandes an einer Umlenkvorrichtung, insbesondere an einer oder mehrerer Umlenkrollen, gebildet sein. Entsprechend kann in beispielhaften Ausführungsformen zum Verpacken von Hohlgläsern das Verfahren einen Schritt des Kippens des zumindest einen Hohlglases über eine Umlenkvorrichtung bzw. Umlenkrolle des Förderbandes, bevorzugt hin zur Führungseinrichtung, welche konfiguriert ist, das zumindest eine Hohlglas gleitend zu führen, aufweisen. Das Kippen des zumindest einen Hohlglases über das Abwurfende des Förderbandes kann insbesondere ein passives Kippen des zumindest einen Hohlglases über das Abwurfende des Förderbandes sein. Das passive Kippen des zumindest einen Hohlglases meint dabei, dass das zumindest eine Hohlglas bevorzugt ausschließlich aufgrund der Gewichtskraft des zumindest einen Hohlglases von dem Abwurfende des Förderbandes kippt. Mit anderen Worten meint das passive Kippen des zumindest einen Hohlglases, dass das zumindest eine Hohlglas bevorzugt ausschließlich aufgrund der Krümmung der Umlenkvorrichtung bzw. Umlenkrolle, insbesondere des runden Querschnitts der Umlenkrolle, von dem Abwurfende des Förderbandes kippt bzw. konfiguriert ist zu kippen. Mit weiter anderen Worten meint das passive Kippen des zumindest einen Hohlglases, dass das zumindest eine Hohlglas bevorzugt ausschließlich aufgrund der Änderung einer Bewegungsrichtung des Förderbandes an der Umlenkvorrichtung, insbesondere der Änderung der Bewegungsrichtung des Förderbandes durch die Umlenkvorrichtung von zumindest etwa 60°, beispielsweise in einem Bereich von etwa 90° bis etwa 180°, kippt bzw. konfiguriert ist zu kippen.

In beispielhaften Ausführungsformen kann das Abwurfende des Förderbandes durch den Ablauf des Förderbandes an der Umlenkvorrichtung gebildet sein, wobei die Umlenkvorrichtung eine oder mehrere Umlenkrollen aufweisen kann. Die Umlenkvorrichtung kann insbesondere konfiguriert sein, eine umlenkende Bewegung oder Umorientierung auf das Förderband auszuüben. Die umlenkende Bewegung oder Umorientierung des Förderbands kann insbesondere eine Veränderung oder einen Wechsel der Bewegungsrichtung des Förderbandes umfassen, wobei die Orientierung der Bewegungsrichtung des Förderbandes in einer Ebene aufgespannt durch eine Höhenrichtung und eine Förderrichtung geneigt oder verändert, insbesondere in eine der Förderrichtung parallel entgegengesetzte Richtung gewechselt wird.

In beispielhaften Ausführungsformen kann die Umlenkvorrichtung konfiguriert sein, die Bewegungsrichtung des Förderbandes um zumindest etwa 60°, vorzugsweise in einem Bereich von etwa 60° bis etwa 220°, weiter vorzugsweise in einem Bereich von etwa 90° bis etwa 180°, in einer Ebene aufgespannt durch eine Höhenrichtung und eine Förderrichtung zu neigen oder zu verändern. Die Umlenkvorrichtung kann dabei insbesondere im Bereich eines Förderendes angeordnet sein, wobei das Förderende den Bereich des Förderbandes charakterisiert, in dem das Hohlglas konfiguriert ist, das Förderband aufgrund der Änderung der Bewegungsrichtung des Förderbandes zu verlassen.

In bevorzugten Ausführungsformen des Verfahrens zum Verpacken von Hohlgläsern kann die Verpackung eine Mehrzahl von Verpackungsplätzen für eine entsprechende Mehrzahl von Hohlgläsern aufweisen, wobei die Führungseinrichtung und/oder die Verpackung bewegbar sind, und wobei nach dem gleitenden Führen des zumindest einen Hohlglases in die Verpackung und vor dem gleitenden Führen eines weiteren Hohlglases in die Verpackung zumindest eines von der Führungseinrichtung und der Verpackung relativ zum Abwurfende des Förderbandes bewegt wird.

Durch die Verpackung, welche eine Mehrzahl von Verpackungsplätzen aufweist, wobei zumindest eines von der Führungseinrichtung und der Verpackung nach dem gleitenden Führen eines Hohlglases in die Verpackung und vor dem gleitenden Führen eines weiteren Hohlglases in die Verpackung bewegt wird, kann ein besonders schnelles und sicheres Verfahren zum Verpacken von Hohlgläsern bereitgestellt werden, welches dazu dient eine Verpackung mit einer Mehrzahl von Verpackungsplätzen mit Hohlgläsern zu befüllen.

In beispielhaften Ausführungsformen können die Verpackungsplätze der Mehrzahl von Verpackungsplätzen voneinander durch Trennelemente zumindest abschnittsweise voneinander getrennt sein.

Beispielhafte Verpackungen können im Wesentlichen aus den folgenden Stoffen bzw. Materialien bestehen bzw. diese aufweisen: Holz, Pappe, Papier, Kunststoff, Metall. Beispielhafte Trennelemente können hölzerne Abschnitte, Abschnitte aus Pappe, Papierabschnitte, Kunststoffabschnitte oder metallische Abschnitte sein.

In bevorzugten Ausführungsformen kann nach dem gleitenden Führen eines Hohlglases in die Verpackung und vor dem gleitenden Führen eines weiteren Hohlglases in die Verpackung, bis zu einem Zustand in dem die Verpackungsplätze in einer Breitenrichtung der Verpackung mit Hohlgläsern besetzt sind, die Führungseinrichtung in einer Querrichtung relativ zum Abwurfende bewegt werden, und ab einem Zustand in dem die Verpackungsplätze in Breitenrichtung der Verpackung mit Hohlgläsern besetzt sind, die Verpackung in Förderrichtung relativ zum Abwurfende bewegt werden.

Mit anderen Worten kann nach dem gleitenden Führen eines Hohlglases in die Verpackung und vor dem gleitenden Führen eines weiteren Hohlglases in die Verpackung, zur Besetzung der Verpackungsplätze der Verpackung in Breitenrichtung, die Führungseinrichtung in einer Querrichtung relativ zum Abwurfende bewegt werden. Sind die Verpackungsplätze der Verpackung in Breitenrichtung besetzt, kann nach dem gleitenden Führen eines Hohlglases in die Verpackung und vor dem gleitenden Führen eines weiteren Hohlglases in die Verpackung die Verpackung in Förderrichtung relativ zum Abwurfende bewegt werden. Die Verpackung kann dabei beispielhaft im Wesentlichen in Förderrichtung zum Abwurfende hin oder vom Abwurfende weg bewegt werden.

Durch eine mögliche Bewegung der Führungseinrichtung in Förderrichtung könnten verschiedene Hohlgläser mit voneinander abweichenden Gewichtskraftverläufen beim gleitenden Führen beaufschlagt werden, wodurch ein sicheres und zuverlässiges Führen einer Vielzahl von Hohlgläsern in eine Verpackung erschwert würde. Vorteilhaft ermöglicht deshalb das Bewegen der Führungseinrichtung in Querrichtung, um insbesondere ein vollständiges Besetzen der Verpackungsplätze der Verpackung in Breitenrichtung mit Hohlgläsern zu ermöglichen, dass die gleiche Führungseinrichtung genutzt werden kann, um eine Vielzahl von Hohlgläsern gleitend in die Verpackung zu führen, so dass die einzelnen Hohlgläser einer im Wesentlichen gleichen Gewichtskraft beim gleitenden Führen unterliegen. Folglich kann durch ein mögliches Bewegen der Führungseinrichtung in Querrichtung ein konstanter Vorgang zum gleitenden Führen der Hohlgläser in die Verpackung bereitgestellt werden. Insbesondere kann vermieden werden, dass die nacheinander gleitend geführten Hohlgläser während dem gleitenden Führen voneinander abweichende, durch die Gewichtskraft der Hohlgläser getriebene, Bewegungen beschreiben und somit mit grob voneinander abweichenden Geschwindigkeiten in die Verpackung geführt werden. Mit grob voneinander abweichenden Geschwindigkeiten sind beispielsweise Abweichungen gemeint, wobei die Geschwindigkeit mit denen zwei Hohlgläser in die Verpackung gleiten ein Verhältnis außerhalb von 0,7 bis 1,3, bevorzugt außerhalb von 0,8 bis 1,2 und besonders bevorzugt von etwa 0,9 bis 1,1 aufweisen.

Somit ermöglicht die vorbeschriebene insbesondere in Querrichtung bewegbare Führungseinrichtung im Zusammenspiel mit der insbesondere in Förderrichtung bewegbaren Verpackung vorteilhaft, dass ein besonders konstanter und damit sicherer und zuverlässiger Prozess zum Verpacken von Gläsern bereitgestellt wird.

In beispielhaften Ausführungsformen kann die Führungseinrichtung zwischen dem gleitenden Führen eines Hohlglases in die Verpackung und dem gleitenden Führen eines weiteren Hohlglases in die Verpackung insbesondere starr bleiben bzw. relativ zum Abwurfende verweilen. In diesen beispielhaften Ausführungsformen ist es vorteilhaft, wenn die Verpackung in Förderrichtung und Querrichtung bewegbar ist, um ein zuverlässiges, sicheres und schnelles Befüllen einer Verpackung mit Hohlgläsern zu ermöglichen.

In weiteren beispielhaften Ausführungsformen kann die Führungseinrichtung mehrteilig ausgeführt sein. So kann die Führungseinrichtung beispielsweise im Wesentlichen einen dem Abwurfende des Förderbandes zugewandten festen bzw. fixierten ersten Führungsteilabschnitt aufweisen und einen der Verpackung zugewandten beweglichen zweiten Führungsteilabschnitt aufweisen. Der erste Führungsteilabschnitt und der zweite Führungsteilabschnitt können beispielsweise ineinander gesteckt sein und/oder durch ein Gelenk verbunden sein und/oder beabstandet zueinander konfiguriert sein. Durch die Ausgestaltung der Führungseinrichtung, welche einen relativ zum Abwurfende festen ersten Führungsteilabschnitt aufweist und einen relativ zur Verpackung beweglichen zweiten Führungsteilabschnitt aufweist, kann eine besonders flexible Führungseinrichtung bereitgestellt werden, welche ein vorteilhaft zuverlässiges und schnelles Befüllen einer Verpackung ermöglicht.

In bevorzugten Ausführungsformen kann das Verfahren zum Verpacken von Hohlgläsern einen Umorientierungsschritt vor dem gleitenden Führen umfassen, um zumindest einige der Hohlgläser zu kippen.

Mit anderen Worten kann in bevorzugten Ausführungsformen das Verfahren zum Verpacken von Hohlgläsern vor dem gleitenden Führen des zumindest einen Hohlglases in die Verpackung einen Umorientierungsschritt aufweisen, um Hohlgläser zu kippen.

Der Umorientierungsschritt kann insbesondere in Förderrichtung des Förderbandes dem gleitenden Führen vorangestellt sein. Mit anderen Worten kann der Umorientierungsschritt entgegen der Förderrichtung bzw. stromaufwärts der Förderrichtung dem gleitenden Führen vorangestellt sein. Beispielhaft kann der Umorientierungsschritt mittels einer Umorientierungseinrichtung durchgeführt werden, wobei die Umorientierungseinrichtung in Förderrichtung des Förderbandes der Führungseinrichtung zum gleitenden Führen vorangestellt sein kann.

Dadurch, dass zumindest einige der Hohlgläser mittels eines Umorientierungsschritts gekippt werden, können beispielhaft gekippte und nicht-gekippte Hohlgläser zur Führungseinrichtung gefördert werden. Durch die unterschiedlich orientierten Hohlgläser, welche zur Führungseinrichtung gefördert werden, können die Hohlgläser wiederum besonders platzsparend in der Verpackung platziert werden, wodurch ein insbesondere vorteilhaftes Verfahren zur Verpackung von Hohlgläsern für eine ressourcenschonende Verpackung von einer Vielzahl von Hohlgläsern bereitgestellt wird.

Beispielhaft kann die Führungseinrichtung dem Abwurfende zugewandt eine Eingangsöffnung aufweisen, welche konfiguriert ist nur Hohlgläser mit einer bestimmten Orientierung in die Führungseinrichtung gleiten zu lassen bzw. hinein zu lassen. Weiterhin können somit, indem einige der Hohlgläser mittels eines Umorientierungsschritts gekippt werden, beispielhaft nur gekippte oder nur nicht-gekippte Hohlgläser durch die Führungseinrichtung gleitend in die Verpackung geführt werden, so dass die anderen gekippten oder nicht-gekippten Hohlgläser nicht von der Führungseinrichtung erfasst werden bzw. nicht in das gleitende Führen der Führungseinrichtung gelangen. Beispielhaft können somit durch gekippte und nicht-gekippte Hohlgläser zwischen Hohlgläsern mit und ohne Materialfehlern oder sonstigen Qualitätsunterschieden oder Fehlern unterschieden werden, um Hohlgläser im Verpackungsverfahren beispielhaft als Ausschuss oder als erste Wahl und als zweite Wahl zu kennzeichnen.

In beispielhaften Ausführungsformen kann die Umorientierungseinrichtung mit einem Umorientierungselement versehen sein, wie beispielsweise einer Stange. Die Umorientierungseinrichtung kann dabei anhand eines vorgegebenen Programms, mittels eines Zählwerks, und/oder mittels einer Erkennungseinheit, wie beispielsweise einer optischen Erkennung, festlegen, welche Hohlgläser, beispielsweise mittels eines Umorientierungselements zu kippen sind. Die Umorientierungseinrichtung kann zum Kippen bzw. zum Umorientieren eines Hohlglases beispielsweise mittels einer Höhenverstellung die Höhe eines Umorientierungselements so einstellen, dass das Hohlglas im Wesentlichen entgegen der Förderrichtung des Förderbandes oder im Wesentlichen in Förderrichtung des Förderbandes umkippt.

Ein gekipptes Hohlglas beschreibt ein Hohlglas, welches im Wesentlichen an einem Hohlglaswandabschnitt aufliegt, insbesondere an einem Hohlglaswandabschnitt auf dem Förderband aufliegt. Ein nicht-gekipptes Hohlglas beschreibt ein Hohlglas, welches im Wesentlichen an dem Hohlglasbod oder dem Hohlglasrand aufliegt, insbesondere an dem Hohlglasboden oder dem Hohlglasrand auf dem Förderband aufliegt.

In bevorzugten Ausführungsformen können die Hohlgläser abwechselnd gekippt und nicht-gekippt zum Schritt des gleitenden Führens gefördert werden.

Vorteilhaft kann durch das abwechselnde Fördern gekippter und nicht-gekippter Hohlgläser zum Schritt des gleitenden Führens ermöglicht werden, dass Hohlgläser unterschiedlich orientiert gleitend in die Verpackung geführt werden, wodurch eine besonders platzsparende und ressourcenschonende Verpackung einer Vielzahl von Hohlgläsern erreicht werden kann.

In weiteren beispielhaften Ausführungsformen können die Hohlgläser abwechselnd in Förderrichtung und entgegen der Förderrichtung gekippt zum Schritt des gleitenden Führens gefördert werden. Mit anderen Worten können in weiteren beispielhaften Ausführungsformen die Hohlgläser abwechselnd gekippt mit dem Hohlglasboden voraus und mit dem Hohlglasrand voraus zum Schritt des gleitenden Führens gefördert werden.

Das Fördern gekippter Hohlgläser abwechselnd mit Hohlglasboden voraus und Hohlglasrand voraus ermöglicht weiterhin unterschiedlich orientierte Hohlgläser gleitend in die Verpackung zu führen, wodurch eine besonders vorteilhafte platzsparende und ressourcenschonende Verpackung einer Vielzahl von Hohlgläsern ermöglicht wird.

In bevorzugten Ausführungsformen können die Hohlgläser, welche in einem Umorientierungsschritt gekippt werden, durch einen Kontakt mit einem Querelement oberhalb eines Schwerpunkts des jeweiligen Hohlglases gekippt werden.

Das Querelement beschreibt ein beispielhaftes Umorientierungselement und kann ein Rundstab, ein Mehrkantstab oder ähnliches sein. Das Umorientierungselement kann beispielhaft auch aus einer Mehrzahl von Querelementen bestehen. Werden zwei Querelemente als Umorientierungselement verwendet, kann während dem Umorientierungsschritt eines der beiden Querelemente dazu dienen in Förderrichtung vor dem Hohlglas angeordnet zu werden, und das andere der beiden Querelemente dazu dienen in Förderrichtung hinter dem Hohlglas angeordnet zu werden. Somit kann durch eine Bewegung beider Querelemente zusammen in Förderrichtung, mit einer Geschwindigkeit die größer ist als die des Förderbandes in Förderrichtung, das Hohlglas im Wesentlichen in Förderrichtung gekippt werden. Weiterhin kann durch ein Stillstehen beider Querelemente relativ zur Förderrichtung oder eine Bewegung beider Querelemente zusammen, mit einer Geschwindigkeit die kleiner ist als die des Förderbandes in Förderrichtung, das Hohlglas im Wesentlichen entgegen der Förderrichtung gekippt werden. Während die Verwendung zweier Querelement ein sanftes Führen des Hohlglases in einen gekippten Zustand erlaubt, ermöglicht ein einzelnes Querelement, mit einer Bewegung entsprechend des vorbeschriebenen Geschwindigkeits-Zusammenhangs für zwei Querelemente, dass ein Hohlglas zuverlässig gekippt werden kann, wobei eine besonders einfache Struktur bereitgestellt wird.

In alternativen Ausführungsformen können die Hohlgläser, welche in einem Umorientierungsschritt gekippt werden, durch einen Kontakt mit einem Querelement unterhalb eines Schwerpunkts des jeweiligen Hohlglases gekippt werden. Ein Kontakt mit einem Querelements unterhalb eines Schwerpunkts des jeweiligen Hohlglases, um das Hohlglas im Umorientierungsschritt zu kippen, eignet sich insbesondere um das Hohlglas in Förderrichtung zu kippen.

In beispielhaften Ausführungsformen kann ein Querelement mittels einer Höhenverstellung konfiguriert sein, sowohl oberhalb eines Schwerpunkts eines betreffenden Hohlglases Hohlgläser zu kontaktieren, als auch unterhalb eines Schwerpunkts eines betreffenden Hohlglases Hohlgläser zu kontaktieren. Weiterhin kann mittels einer Höhenverstellung ein Kontakt zwischen einem Querelement und einem Hohlglas vermieden werden, indem das Querelement in eine Höhe oberhalb des Hohlglases verstellt wird.

Durch den Umorientierungsschritt, welcher mittels verschiedener Umorientierungselemente durchgeführt werden kann, insbesondere mittels einem oder mehrerer Querelemente durchgeführt werden kann, wird ein besonders einfaches und gleichzeitig vielseitiges Verpackungsverfahren bereitgestellt, welches die Umorientierung von Hohlgläsern und die damit verbundenen Vorteile der platzsparenden und ressourcenschonenden Verpackung, sowie der Eignung zur Sortierung von Hohlgläsern mit Qualitätsunterschieden, beim Verpacken zuverlässig und sicher ermöglicht.

In bevorzugten Ausführungsformen können mehrere Führungseinrichtungen im Bereich des Abwurfendes angeordnet sein, so dass entsprechend mehrere Hohlgläser nebeneinander gleitend in die Verpackung geführt werden können.

Insbesondere können in bevorzugten Ausführungsformen mehrere Führungseinrichtungen im Wesentlichen in Querrichtung nebeneinander im Bereich des Abwurfendes des Förderbandes angeordnet sein, so dass entsprechend mehrere Hohlgläser in Querrichtung des Förderbandes bzw. in Breitenrichtung der Verpackung nebeneinander gleitend in die Verpackung geführt werden können.

Durch die Anordnung mehrerer Führungseinrichtungen im Bereich des Abwurfendes, wird ermöglicht mehrere Hohlgläser zeitlich und/oder räumlich parallel in die Verpackung zu führen, so dass ein vorteilhaftes Verfahren zur schnellen Verpackung einer Vielzahl von Hohlgläsern bereitgestellt werden.

In weiteren beispielhaften Ausführungsformen kann ein Förderband eine Mehrzahl von Abwurfenden aufweisen, wobei an jedem Abwurfende der Mehrzahl von Abwurfenden des Förderbandes zumindest eine Führungseinrichtung angeordnet ist, um jeweils zumindest ein Hohlglas gleitend in eine Verpackung zu führen. Eine solche beispielhafte Ausführungsform ermöglicht vorteilhaft beispielsweise die getrennte Verpackung von Hohlgläsern erster und zweiter Wahl und/oder die getrennte Verpackung von Hohlgläsern mit unterschiedlicher Geometrie.

In bevorzugten Ausführungsformen kann die Führungseinrichtung zumindest ein Führungsrohr umfassen, dessen Längsachse abschnittsweise gekrümmt ist, und/oder zumindest ein Rohrsegment umfassen, welches keinen geschlossenen Umfang aufweist und dessen Längsachse abschnittsweise gekrümmt ist, und/oder zumindest ein Paar von Führungsschienen umfassen, welche abschnittsweise gekrümmt sein können.

Eine Führungseinrichtung, welche zumindest ein Führungsrohr, und/oder ein Rohrsegment, und/oder ein Paar von Führungsschienen umfasst, ermöglicht vorteilhaft, dass Hohlgläser sicher und genau gleitend geführt werden können, während auf einen Roboter zum Heben von Hohlgläsern in eine Verpackung verzichtet werden kann. Die vorbeschriebenen beispielhaften Führungseinrichtungen ermöglichen vorteilhaft das sichere und genaue gleitende Führen von Hohlgläsern, insbesondere das sichere und genaue gleitende Führen von im Wesentlichen runden Hohlgläsern, wobei die für das vorliegenden Verpackungsverfahren geeigneten Hohlgläser nicht darauf beschränkt sind und auch eine oder mehrere Kanten aufweisen können.

Die Führungseinrichtung der vorliegenden Erfindung weist insbesondere eine oder mehrere Gleitflächen auf. Beim gleitenden Führen des zumindest einen Hohlglases in die Verpackung mittels der Führungseinrichtung kann das zumindest eine Hohlglas dabei eine oder mehrere der einen oder mehreren Gleitflächen der Führungseinrichtung kontaktieren. Durch das Kontaktieren der einen oder mehreren Gleitflächen entsteht eine Gleitreibung zwischen den Gleitflächen und dem Hohlglas, so dass das Hohlglas gleitend in die Verpackung geführt werden kann.

Weitere beispielhafte Führungseinrichtungen können insbesondere Mehrkantführungsrohre, Führungsringe und weitere Elemente oder Vorrichtungen umfassen bzw. sein, welche eine oder mehrere Gleitflächen aufweisen.

In bevorzugten Ausführungen kann die Führungseinrichtung einen Filzabschnitt aufweisen, und/oder einen Gummiabschnitt aufweisen, und/oder eine Luftzufuhreinrichtung aufweisen, die konfiguriert ist einen Luftstrom zu bewirken, der ein gleitend geführtes Hohlglas abbremst.

Indem die Führungseinrichtung einen Filzabschnitt aufweist, kann eine besonders polsternde und mit besonders gleitreibenden Eigenschaften versehene Führungseinrichtung bereitgestellt werden, welche dazu geeignet ist ein Hohlglas beschädigungsfrei in eine Verpackung gleitend zu führen. Die Führungseinrichtung kann dabei insbesondere zumindest ein Führungsrohr oder eine andere Führungseinrichtung sein, welches im inneren Umfang ganz oder abschnittsweise einen Filzabschnitt aufweist, um ein Hohlglas vorteilhaft beschädigungsfrei in eine Verpackung gleitend zu führen. Beispielsweise kann mittels eines Filzabschnitts an einer inneren Umfangsseite einer Führungseinrichtung ein verkratzen und andere mechanische Beeinträchtigungen des Hohlglases durch die Führungseinrichtung verhindert bzw. vermieden werden.

Indem die Führungseinrichtung einen Gummiabschnitt aufweist, kann eine mit einer besonders bremsenden Eigenschaften versehene Führungseinrichtung bereitgestellt werden, welche dazu geeignet ist ein Hohlglas beschädigungsfrei in eine Verpackung gleitend zu führen. Die Führungseinrichtung kann dabei insbesondere zumindest ein Führungsrohr oder eine andere Führungseinrichtung sein, welches im inneren Umfang ganz oder abschnittsweise einen Gummiabschnitt aufweist, um ein Hohlglas vorteilhaft abzubremsen und beschädigungsfrei in eine Verpackung gleitend zu führen. Insbesondere kann lediglich ein der Verpackung zugewandter Endabschnitt der Führungseinrichtung im inneren Umfang einen Gummiabschnitt aufweisen. Beispielsweise kann mittels eines vorbestimmten Gummiabschnitts an einer inneren Umfangsseite einer Führungseinrichtung eine vorbestimmte maximale Geschwindigkeit festgelegt werden, mit der ein Hohlglas in eine Verpackung geführt wird.

Indem die Führungseinrichtung eine Luftzufuhreinrichtung aufweist, kann eine mit einer gezielt bremsenden Eigenschaften versehene Führungseinrichtung bereitgestellt werden, welche dazu geeignet ist ein Hohlglas beschädigungsfrei in eine Verpackung gleitend zu führen. Die Führungseinrichtung kann dabei insbesondere zumindest ein Führungsrohr oder eine andere Führungseinrichtung sein, wobei die Luftzufuhreinrichtung an einem der Verpackung zugewandten Endabschnitt der Führungseinrichtung angeordnet ist, so dass ein Hohlglas vor dem Platzieren in einer Verpackung gezielt abgebremst werden kann. Beispielsweise kann mittels eines vorbestimmten Luftdrucks und einer vorbestimmten Strömungsrichtung eine vorbestimmte maximale Geschwindigkeit festgelegt werden, mit der ein Hohlglas in eine Verpackung geführt wird.

Die Führungseinrichtung gemäß der vorstehend beschriebenen Ausführungsformen ist nicht darauf beschränkt und kann weitere verschiedene polsternde, reibende, bremsende oder auch beschleunigende Einrichtungen und Abschnitte aufweisen, um ein gezieltes Verfahren zur Verpackung von Hohlgläsern bereitzustellen.

Ein weiterer Aspekt der Erfindung betrifft ein Verpackungssystem zur Verpackung von Hohlgläsern, umfassend:
- ein Förderband, wobei das Förderband konfiguriert ist zumindest ein Hohlglas zu einem Abwurfende des Förderbandes zu fördern;
- eine Verpackungsstelle, wobei die Verpackungsstelle konfiguriert ist eine Verpackung bereitzustellen; und
- eine Führungseinrichtung, welche konfiguriert ist das zumindest eine Hohlglas gleitend vom Abwurfende des Förderbandes in die Verpackung zu führen.

Die vorstehend beschriebenen bevorzugten, beispielhaften und alternativen Ausführungsformen des Verfahrens zum Verpacken von Hohlgläsern und deren Effekte beziehen sich gleichermaßen auf das Verpackungssystem zur Verpackung von Hohlgläsern.

Im Folgenden werden Ausführungsformen der Erfindung anhand der beiliegenden Figuren näher beschrieben. Es versteht sich, dass die vorliegende Erfindung nicht auf diese Ausführungsformen beschränkt sind, und dass einzelne Merkmale der Ausführungsformen im Rahmen der beiliegenden Ansprüche zu weiteren Ausführungsformen kombiniert werden können.

Es zeigt:
- Figur 1: eine schematische Darstellung eines Verpackungssystems;
- Figur 2: ein Flussdiagramm umfassend Schritte eines Verfahrens zum Verpacken von Hohlgläsern;
- Figur 3: ein schematisches Verpackungssystem mit Umorientierungseinrichtung;
- Figuren 4a - 4f: beispielhafte Führungseinrichtungen;
- Figur 5a: eine Schnittdarstellung einer beispielhaften Führungseinrichtung;
- Figur 5b: eine Schnittdarstellung einer weiteren beispielhaften Führungseinrichtung;
- Figur 6: eine Draufsicht eines weiteren schematischen Verpackungssystems.

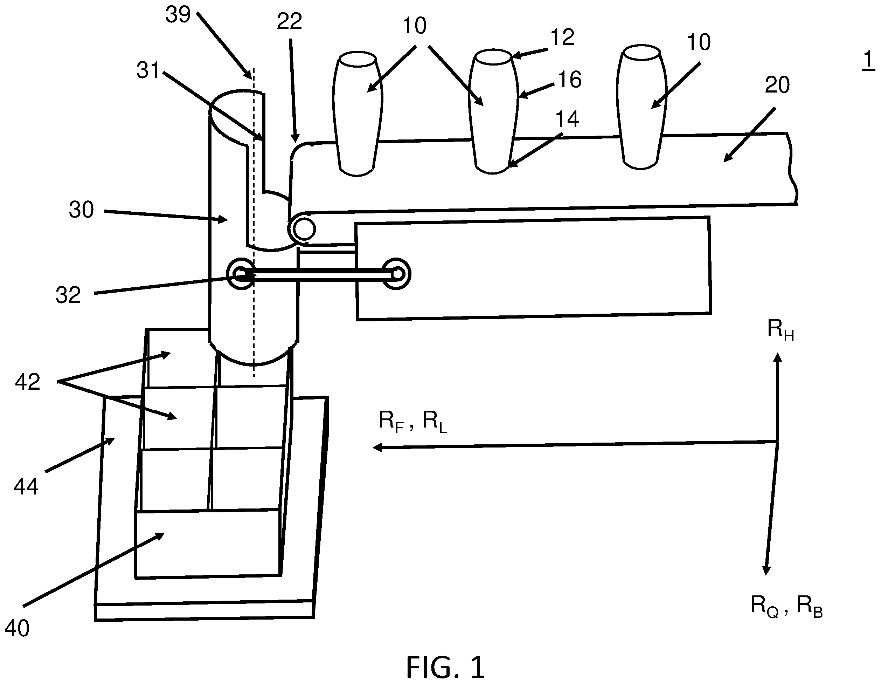

Figur 1 zeigt eine schematische Darstellung eines Verpackungssystems 1 gemäß der vorliegenden Erfindung. Die schematische Darstellung des Verpackungssystems 1 in Figur 1 beschränkt sich dabei auf die Wesentlichen Elemente des Verpackungssystems 1 und verzichtet auf die Darstellung üblicher Maschinenabschnitte und Maschinenanbauteile, wie beispielsweise Maschinenfüße.

Wie in Figur 1 gezeigt, werden auf einem Förderband 20 mehrere Hohlgläser 10 in Förderrichtung R_{F} hin zu einem Abwurfende 22 des Förderbands 20 gefördert. Das Abwurfende 22 des Förderbandes 20 wird durch den Ablauf des Förderbandes 20 an einer Umlenkrolle gebildet. Die Förderrichtung R_{F} entspricht in Anbetracht der Figur 1 im Wesentlichen einer Richtung von rechts nach links und verläuft im Wesentlichen parallel zur Oberfläche des Förderbands 20.

Die Hohlgläser 10, wie in Figur 1 gezeigt, weisen einen Hohlglasrand 12 auf. Der Hohlglasrand 12 stellt eine Öffnung des Hohlglases 10 dar, wodurch beispielsweise Flüssigkeiten in den Hohlraum des Hohlglases 10 bzw. aus dem Hohlraum des Hohlglases gelangen können. Weiterhin können die Hohlgläser 10 einen Hohlglasboden 14 und einen Hohlglaswandabschnitt 16 aufweisen, wobei der Hohlglasboden 14 beispielsweise flach konfiguriert sein kann oder konvex konfiguriert sein kann. Der Hohlglaswandabschnitt 16 erstreckt sich im Wesentlichen zwischen dem Hohlglasrand 12 und dem Hohlglasboden 14 und kann eine beliebige Kontur aufweisen. Die Hohlgläser 10, wie in Figur 1 angedeutet sind Trinkgläser. Hohlgläser 10 gemäß der vorliegenden Erfindung können beispielsweise auch Vasen, Flaschen, Krüge und andere Hohlgläser sein.

Wie in Figur 1 gezeigt, ist im Bereich des Abwurfendes 22 eine Führungseinrichtung 30 angeordnet, welche konfiguriert ist die Hohlgläser 10 von dem Förderband 20 in eine Verpackung 40 gleitend zu führen. Die Führungseinrichtung 30 kann, wie in Figur 1 beispielhaft angedeutet, eine Eingangsöffnung 31 aufweisen, damit die Hohlgläser 10 von dem Förderband 20 bzw. über das Abwurfende 22 des Förderbandes 20 durch die Eingangsöffnung 31 in die Führungseinrichtung 30 gelangen können.

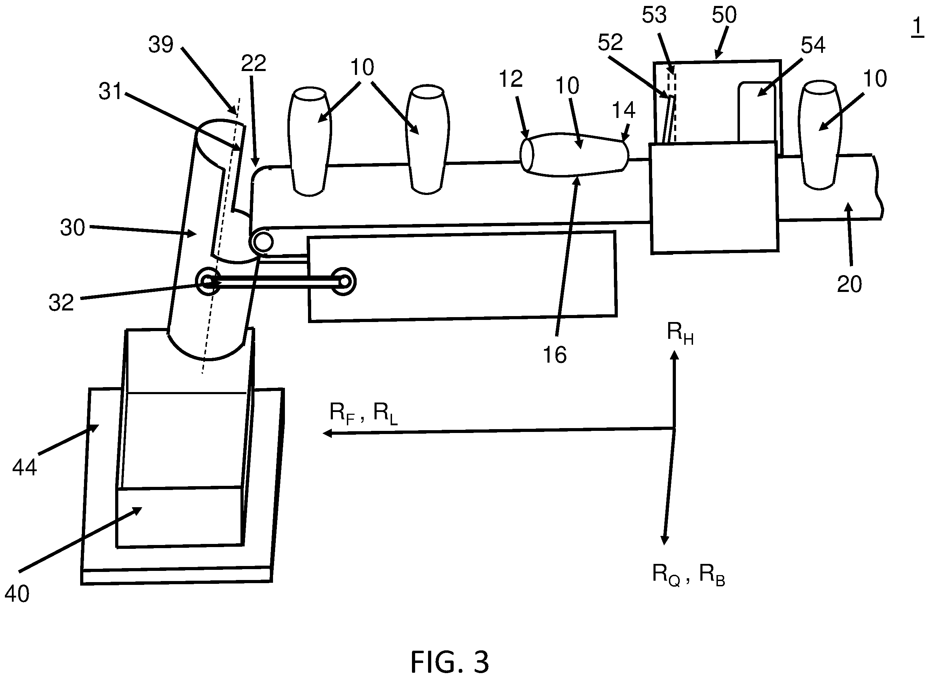

Wie in Figur 1 gezeigt, kann mittels der in Förderrichtung R_{F} distal an dem Förderband 20 angeordneten Umlenkvorrichtung, welche beispielhaft durch zumindest eine Umlenkrolle oder eine Förderrolle gebildet ist, das Verpackungssystem 1 konfiguriert sein, am Abwurfende 22 des Förderbandes 20 ein Hohlglas 10 zu kippen, insbesondere am Abwurfende 22 ein Hohlglas 10 von dem Förderband 20 hin zur Führungseinrichtung zu kippen. Bei diesem bevorzugten Kippen veranlasst das Verpackungssystem 1, das Hohlglas 10 das Förderband 20 am Abwurfende 22 zu verlassen, insbesondere fallend zu verlassen, wobei weiter bevorzugt das Hohlglas 10 hin zur bzw. in die Führungseinrichtung 30 fällt. Wie durch Fig. 1 und weiter auch durch Fig. 3 verdeutlicht, kann das Kippen des zumindest einen Hohlglases 10 an dem Abwurfende 22 bzw. über das Abwurfende 22 des Förderbandes 20 insbesondere ein passives Kippen des zum indest einen Hohlglases 10 an dem Abwurfende 22 bzw. über das Abwurfende 22 des Förderbandes 20 sein. Das passive Kippen des zumindest einen Hohlglases 10, wie durch die Figuren 1 und 3 beispielhaft angedeutet, meint dabei, dass das zumindest eine Hohlglas 10 bevorzugt ausschließlich aufgrund der Gewichtskraft des zumindest einen Hohlglases 10 von dem Abwurfende 22 des Förderbandes 20 kippt. Mit anderen Worten meint das passive Kippen des zumindest einen Hohlglases 10, dass das zumindest eine Hohlglas 10 bevorzugt ausschließlich aufgrund der Umlenkung des Förderbandes an der Umlenkvorrichtung bzw. Umlenkrolle, insbesondere des runden Querschnitts der Umlenkrolle, von dem Abwurfende 22 des Förderbandes 20 kippt bzw. konfiguriert ist, zu kippen.

Wie in Fig. 1 gezeigt, ist die Umlenkvorrichtung, vorliegend beispielhaft durch zumindest eine Umlenkrolle gebildet, konfiguriert, in einer Ebene aufgespannt durch die Förderrichtung R_{F} und durch die Höhenrichtung R_{H} die Bewegungsrichtung des Förderbandes 20 zu verändern. Dabei wird die Bewegungsrichtung des Förderbandes 20 mittels der Umlenkvorrichtung beispielhaft von einer Richtung in Förderrichtung R_{F} hin zu einer Richtung in etwa parallel entgegengesetzt zur Förderrichtung R_{F} geändert. Dadurch ist das Verpackungssystem 1 vorteilhaft konfiguriert, die Hohlgläser 10 am Abwurfende 22 abzuwerfen, insbesondere hin zur Führungseinrichtung 30 abzuwerfen. Wie durch Fig. 1 veranschaulicht, kann in alternativen Ausführungsformen eine Änderung der Bewegungsrichtung des Förderbandes 20 von weniger als 180° ausreichen, um Hohlgläser 10 am Abwurfende 22 abzuwerfen.

Wie weiterhin in Figur 1 gezeigt, kann die Führungseinrichtung 30 beispielhaft eine im Wesentlichen runde bzw. zylindrische Kontur aufweisen. Insbesondere im Bereich der Eingangsöffnung 31 der Führungseinrichtung 30 kann die Führungseinrichtung 30 einen nicht durchgängigen Umfang aufweisen, um sicherzustellen, dass ein Hohlglas 10 in die Führungseinrichtung 30 gelangt und von der Führungseinrichtung 30 gleitend geführt werden kann. In alternativen Ausführungsformen kann die Führungseinrichtung 30 eine im Wesentlichen vieleckige Kontur aufweisen oder eine beliebige gitterartige Kontur aufweisen. Weiterhin kann die Führungseinrichtung 30 auch eine abschnittsweise Kontur aufweisen, welche abschnittsweise umfänglich oder teilumfänglich rund und/oder vieleckig und/oder gitterartig ist.

Wenn wie in Figur 1 angedeutet das Hohlglas 10 das Förderband 20 verlässt, bewegt sich das Hohlglas 10 im Wesentlichen auf Basis der Gewichtskraft des Hohlglases 10 und der sich beim gleitenden Führen ausbildenden Gleitreibung zwischen dem Hohlglas 10 und der Führungseinrichtung 30. Durch das Zusammenspiel der beiden Komponenten, der Gewichtskraft des Hohlglases 10 und der Gleitreibung zwischen dem Hohlglas 10 und der Führungseinrichtung 30, wird das Hohlglas 10 in die Verpackung 40 geführt bzw. gleitend geführt. Beim gleitenden Führen des Hohlglases 10 durch die Führungseinrichtung 30 kann das Hohlglas 10 mit seinem Außenumfang umfänglich mit dem Innenumfang der Führungseinrichtung 30 in Kontakt gelangen oder nur mit einem Abschnitt des Innenumfangs der Führungseinrichtung 30 in Kontakt gelangen.

Das Zusammenspiel der beiden Komponenten, der Gewichtskraft des Hohlglases 10 und der Gleitreibung zwischen dem Hohlglas 10 und der Führungseinrichtung 30, kann insbesondere durch die Geometrie und Oberfläche der Führungseinrichtung 30 beeinflusst bzw. eingestellt werden, so dass auf besonders einfache und ressourcenschonende Weise ein günstiges, zuverlässiges und genaues Verpackungssystem bzw. Verfahren zur Verpackung bereitgestellt werden kann.

Die Führungseinrichtung 30 kann beispielsweise mittels einer Führungsanbindung 38 am Verpackungssystem angebunden sein. Weiterhin kann die Führungseinrichtung 30 mittels der Führungsanbindung 38 bewegt werden, wie beispielsweise in Querrichtung F_{Q} bewegt werden. Weiterhin kann die Führungseinrichtung 30 mittels der Führungsanbindung 38 gegenüber einer Höhenrichtung R_{H}, in einer Ebene aufgespannt durch die Förderrichtung R_{F} und die Höhenrichtung R_{H} und/oder in einer Ebene aufgespannt durch die Querrichtung R_{Q} und die Höhenrichtung H_{R} geneigt werden.

Wie in Figur 1 beispielhaft gezeigt kann die Längsachse 39 der Führungseinrichtung 30 insbesondere im Wesentlichen parallel zur Höhenrichtung R_{H} verlaufen. In weiteren beispielhaften Ausführungsformen kann die Längsachse 39 der Führungseinrichtung 30 im Wesentlichen in einem Abschnitt der Führungseinrichtung 30, welcher der Verpackung 40 zugewandt ist, im Wesentlichen parallel zur Höhenrichtung R_{H} verlaufen bzw. orthogonal zu einer Öffnung der Verpackung 40 verlaufen.

Die Verpackung 40 kann wie in Figur 1 angedeutet eine beliebige Anzahl von Verpackungsplätzen 42 aufweisen, wie beispielsweise sechs Verpackungsplätze 42. In weiteren beispielhaften Ausführungsformen kann die Verpackung 40 insbesondere einen, zwei, drei, vier, fünf, sechs, sieben, acht, neun, zehn, elf, zwölf, sechzehn, zwanzig, vierundzwanzig, dreißig, vierzig oder mehr Verpackungsplätze 42 aufweisen. Die Verpackungsplätze 42 der Verpackung 40 können insbesondere durch Trennabschnitte oder Trennmittel zumindest abschnittsweise voneinander getrennt sein. In weiteren beispielhaften Ausführungsformen kann die Verpackung 40 keinerlei Trennwände oder Trennmittel aufweisen, so dass die Hohlgläser 10 in der Verpackung 40 an benachbarten Hohlgläsern 10 angrenzen bzw. anliegen, so dass die Verpackung 40 mit einer bestimmten Maximalzahl an Hohlgläsern 10 befüllt werden kann.

Die Verpackung 40 kann insbesondere auf einer Verpackungsstelle 44 bereitgestellt werden, wobei die Verpackung 40 auf der Verpackungsstelle 44 und/oder die Verpackungsstelle 44 selbst bewegbar ist. Insbesondere können Verpackung 40 und Verpackungsstelle 44 in einer Ebene die von der Längsrichtung R_{L} und der Breitenrichtung R_{B} aufgespannt wird bewegbar sein. Die Längsrichtung R_{L} kann insbesondere eine Richtung sein, entlang der sich eine Seitenfläche der Verpackung 40 mit der Höhenrichtung H_{R} aufspannt. Die Längsrichtung R_{L} verläuft in Anbetracht von Figur 1 dabei im Wesentlichen von rechts nach links, während die Höhenrichtung H_{R} eine im Wesentlichen nach oben bzw. in die Höhe verlaufende Richtung darstellt. Die Breitenrichtung R_{B} kann insbesondere eine Richtung sein, entlang der sich eine daran anschließende Seitenfläche der Verpackung 40 mit der Höhenrichtung H_{R} aufspannt, wobei die sich anschließende Seitenfläche im Wesentlichen senkrecht zur Seitenfläche der Verpackung verläuft, welche sich entlang der Längsrichtung R_{L} aufspannt.

Wie in Figur 1 durch ein Koordinatensystem angedeutet, kann die Längsrichtung R_{L} im Wesentlichen der Förderrichtung R_{F} entsprechen und die Breitenrichtung R_{B} im Wesentlichen der Querrichtung F_{Q} entsprechen. Weiterhin können die Längsrichtung R_{L}, die Breitenrichtung R_{B} und die Höhenrichtung H_{R} bzw. die Förderrichtung R_{F}, die Querrichtung F_{Q} und die Höhenrichtung H_{R} im Wesentlichen jeweils ein Rechtshandsystem beschreiben, denen jedoch kein fester Ursprung am Verpackungssystem 1 zuzuordnen ist.

In beispielhaften Ausführungsformen kann die Verpackungsstelle 44 einen Sensor zum Erfassen des Befüllstandes der Verpackung 40 mit Hohlgläsern 10 aufweisen. Insbesondere kann die Verpackungsstelle 44 einen Gewichtssensor wie beispielsweise eine Federwaage aufweisen, um anhand eines bestimmten Gewichts eines Hohlglases den Befüllstand der Verpackung 40 mit Hohlgläsern 10 erfassen zu können. Weiterhin kann anhand eines Sensors der Verpackungsstelle 44 erfasst werden, wann ein Hohlglas 10 durch gleitendes Führen der Führungseinrichtung 30 in die Verpackung 40 geführt wurde, so dass eine entsprechende Information an eine Verpackungssystemsteuerung übermittelt werden kann, worauf hin die Verpackung 40 beispielsweise bewegt werden kann und/oder an der Verpackungsstelle 44 insbesondere durch eine unbefüllte Verpackung 40 ausgetauscht werden kann.

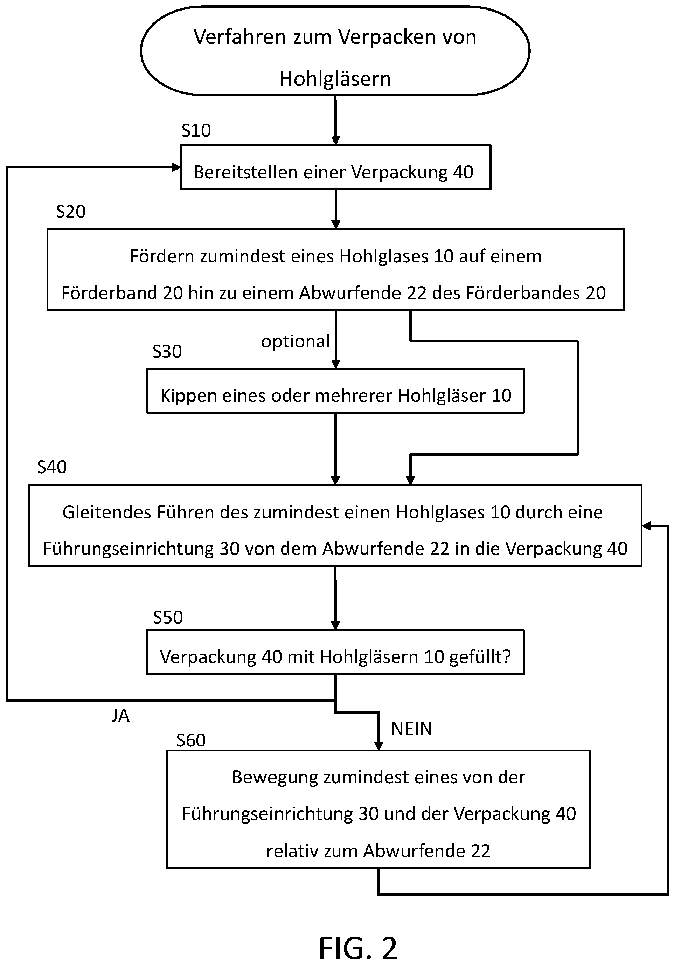

Figur 2 zeigt ein Flussdiagramm, welches ein beispielhaftes Verfahren zum Verpacken von Hohlgläsern gemäß der vorliegenden Erfindung beschreibt. Das Verfahren zum Verpacken von Hohlgläsern nach Figur 2 beschreibt dabei insbesondere die folgenden Schritte:
S10: Bereitstellen einer Verpackung 40.
S20: Fördern zumindest eines Hohlglases 10 auf einem Förderband 20 hin zu einem Abwurfende 22 des Förderbandes.
S30: Kippen eines oder mehrerer Hohlgläser 10.
S40: Gleitendes Führen des zumindest einen Hohlglases 10 durch eine Führungseinrichtung 30 von dem Abwurfende 22 in die Verpackung 40.
S50 Prüfen, ob die Verpackung 40 mit Hohlgläsern 10 gefüllt ist.
S60 Bewegen zumindest eines von der Führungseinrichtung 30 und der Verpackung 40 relativ zum Abwurfende 22.

Die vorstehend beschriebenen Schritte zum Verpacken von Hohlgläsern 10 nach Figur 2 können insbesondere nacheinander ablaufen, also zunächst S10, danach aufeinanderfolgend S20, S30, S40, S50 und in Abhängigkeit des Ergebnisses aus S50, ob die Verpackung 40 mit Hohlgläsern 10 gefüllt ist, falls nein S60. Weiterhin kann insbesondere der Schritt S30 optional durchgeführt werden, so dass ein beispielhaftes Verfahren zum Verpacken von Hohlgläsern 10 sowohl einen Schritt des Kippens von einem oder mehrerer Hohlgläser 10 aufweisen kann, als auch ohne einen Schritt des Kippens von einem oder mehrerer Hohlgläser 10 ablaufen kann.

Der Schritt S50 beschreibt eine Abfrage, worin geprüft wird, ob die Verpackung 40 mit Hohlgläsern 10 gefüllt ist, die Verpackung 40 also voll ist. Weiterhin kann im Schritt S50 insbesondere geprüft werden, wann bzw. ob ein Hohlglas 10 in die Verpackung 40 geführt wurde. Beispielsweise kann die Verpackungsstelle 44 einen Sensor, wie beispielsweise einen Gewichtssensor aufweisen, der das Führen eines Hohlglases 10 in die Verpackung 40, welche auf der Verpackungsstelle 44 bereitgestellt ist, feststellt.

Durch die Abfrage bzw. Prüfung im Schritt S50, kann beispielsweise festgestellt werden, dass:
- ein Hohlglas 10 in die Verpackung 40 geführt wurde und die Verpackung 40 nicht gefüllt ist, gemäß Pfad NEIN nach Schritt S50 in Figur 2; oder
- ein Hohlglas 10 in die Verpackung 40 geführt wurde und die Verpackung 40 gefüllt ist, gemäß Pfad JA nach Schritt S50 in Figur 2; oder
- kein Hohlglas 10 in die Verpackung 40 geführt wurde.

Der letzte Fall, dass kein Hohlglas 10 in die Verpackung 40 geführt wurde entspricht einem Standby Zustand, wobei auf ein Führen eines Hohlglases 10 in die Verpackung 40 gewartet wird.

Im ersten Fall, dass nach dem Führen eines Hohlglases 10 in die Verpackung 40 die Verpackung 40 nicht mit Hohlgläsern 10 gefüllt ist, mit anderen Worten also in der Verpackung 40 noch nicht mit Hohlgläsern 10 besetzte Verpackungsplätze 42 vorliegen, kann eine Bewegung der Führungseinrichtung 30 und/oder der Verpackung 40 initiiert werden. Die Bewegung von zumindest einem von der Führungseinrichtung 30 und der Verpackung 40 ermöglicht, wie durch die Schleife von Schritt S60 hin zu Schritt S40 in Figur 2 vorgesehen, das gleitende Führen zumindest eines weiteren Hohlglases 10, in die Verpackung 40, insbesondere in einen freien Verpackungsplatz 42 der Verpackung 40.

Im zweiten Fall, dass nach dem Führen eines Hohlglases 10 in die Verpackung 40 die Verpackung 40 mit Hohlgläsern 10 gefüllt ist, mit anderen Worten also alle Verpackungsplätze 42 der Verpackung mit Hohlgläsern 10 besetzt sind, kann ein Austausch der gefüllten Verpackung 40 mit einer ungefüllten bzw. leeren Verpackung 40 erfolgen. Somit kann, wie in Schritt S10 vorgesehen, eine ungefüllte Verpackung 40 bereitgestellt werden, wodurch ein vorteilhafter Serienprozess bzw. Serienbetrieb zum Verpacken von Hohlgläsern 10 bereitgestellt werden kann.

Wie anhand des Flussdiagramms in Figur 2 beschrieben und unter Berücksichtigung der Ausführungsformen des Verpackungssystems 1, wie beispielhaft in Figur 1 gezeigt, ermöglicht die vorliegende Erfindung eine besonders einfache, ressourcenschonende und gleichzeitig sichere und schnelle Verpackung einer Vielzahl von Hohlgläsern 10, welche sich insbesondere für die Massenproduktion, wie beispielhaft von Trinkgläsern, eignet. Da zum Verpacken der Hohlgläser 10 kein Roboter verwendet wird, insbesondere kein Saugroboter verwendet wird, können mögliche Fehlerquellen beim Verfahren zum Verpacken reduziert werden, so dass weiterhin ein besonders zuverlässiges Verfahren zum Verpacken von Hohlgläsern 10 ermöglicht wird.

Figur 3 zeigt ein weiteres Verpackungssystem 1 zur Verpackung von Hohlgläsern 10 in einer Verpackung 40. Das Verpackungssystem 1, wie in Figur 3 gezeigt, entspricht dabei im Wesentlichen dem beispielhaften Verpackungssystem 1 aus Figur 1, wobei gemäß Figur 3 das Verpackungssystem 1 insbesondere eine Umorientierungseinrichtung 50 aufweist.

Die Umorientierungseinrichtung 50 kann in Förderrichtung F_{R} des Förderbands 20 insbesondere stromaufwärts der Führungseinrichtung 30 angeordnet sein. Mit anderen Worten kann die Umorientierungseinrichtung 50 am Förderband 20 angeordnet sein, wobei ein auf dem Förderband 20 gefördertes Hohlglas 10 zunächst die Umorientierungseinrichtung 50 passiert und danach weiter zur Führungseinrichtung 30 gefördert wird. In beispielhaften Ausführungsformen des Verpackungssystems 1 können mehrere Umorientierungseinrichtungen 50, Erkennungseinrichtungen oder andere Sortiereinrichtungen an dem Förderband 20 angeordnet sein, insbesondere der Führungseinrichtung 30 vorgeschaltet an dem Förderband 20 angeordnet sein.

Die Umorientierungseinrichtung 50 kann wie in Figur 3 gezeigt insbesondere ein Umorientierungselement 52 aufweisen. Das Umorientierungselement 52 kann beispielsweise ein Querstab bzw. eine Querstange sein. In weiteren beispielhaften Ausführungsformen kann das Umorientierungselement auch ein Paar von Querstäben bzw. Querstangen sein oder eine andere Vielzahl von Elementen wie Stäben aufweisen, welche dazu dienen eine Umorientierung eines Hohlglases 10 ermöglichen.

Das Umorientierungselement 52 kann sich wie in Figur 3 angedeutet in Höhenrichtung R_{H} beabstandet zum Förderband 20 und im Wesentlichen in Querrichtung R_{Q} erstrecken. Das Umorientierungselement 52 kann weiterhin insbesondere an einer Höhenverstellung 53 der Umorientierungseinrichtung 50 angebunden sein, um die Beabstandung des Umorientierungselements 52 zum Förderband 20 in Höhenrichtung R_{H} einstellen zu können bzw. das Umorientierungselement 52 in Höhenrichtung R_{H} zu bewegen. In weiteren beispielhaften Ausführungsformen kann die Umorientierungseinrichtung 50 eine Vorwärts-Rückwärts-Verstellung aufweisen, welche konfiguriert ist das Umorientierungselement 52 in Förderrichtung R_{F} vorwärts oder rückwärts zu bewegen.

Mittels des Umorientierungselements 52 können ein Hohlglas 10 oder mehrere Hohlgläser 10 gekippt werden. Insbesondere kann ein Hohlglas 10 mittels des Umorientierungselements 52 in Förderrichtung R_{F} vorwärts oder rückwärts gekippt werden.

Ein Kippen eines Hohlglases 10 in Förderrichtung R_{F} vorwärts führt zu einer Umorientierung des Hohlglases 10, so dass das Hohlglas 10 mit einem Hohlglaswandabschnitt 16 an dem Förderband 20 aufliegt und mit dem Hohlglasrand 12 voraus im Wesentlichen in Förderrichtung R_{F} orientiert ist. Demgegenüber führt Kippen eines Hohlglases 10 in Förderrichtung R_{F} rückwärts zu einer Umorientierung des Hohlglases 10, so dass das Hohlglas 10 mit einem Hohlglaswandabschnitt 16 an dem Förderband 20 aufliegt und mit dem Hohlglasboden 14 voraus im Wesentlichen in Förderrichtung R_{F} orientiert ist.

Ein Kippen eines Hohlglases 10 in Förderrichtung R_{F} vorwärts kann beispielsweise mittels eines Umorientierungselements 52 bewirkt werden, welches zum Umorientieren des Hohlglases 10 in Höhenrichtung R_{H} oberhalb des Schwerpunkts des Hohlglases 10 angeordnet ist und in Förderrichtung R_{F} vorwärts bewegt wird, insbesondere schneller als das Förderband 20 in Förderrichtung R_{F} vorwärts bewegt wird. Weiterhin kann en Kippen eines Hohlglases 10 in Förderrichtung R_{F} vorwärts beispielsweise mittels eines Umorientierungselements 52 bewirkt werden, welches zum Umorientieren des Hohlglases 10 in Höhenrichtung R_{H} unterhalb des Schwerpunkts des Hohlglases 10 angeordnet ist und in Förderrichtung R_{F} nicht bewegt wird oder in Förderrichtung R_{F} rückwärts bewegt wird. Daneben bestehen weitere Möglichkeiten ein Kippen eines Hohlglases 10 in Förderrichtung R_{F} vorwärts zu bewirken, wie beispielsweise durch ein Führen mittels mehrerer Stäbe, Greifer oder auch durch eine Stoßbewegung eines Umorientierungselements 52.

Ein Kippen eines Hohlglases 10 in Förderrichtung R_{F} rückwärts kann beispielsweise mittels eines Umorientierungselements 52 bewirkt werden, welches zum Umorientieren des Hohlglases 10 in Höhenrichtung R_{H} oberhalb des Schwerpunkts des Hohlglases 10 angeordnet ist und in Förderrichtung R_{F} nicht bewegt wird oder in Förderrichtung R_{F} rückwärts bewegt wird. Weiterhin kann en Kippen eines Hohlglases 10 in Förderrichtung R_{F} rückwärts beispielsweise mittels eines Umorientierungselements 52 bewirkt werden, welches zum Umorientieren des Hohlglases 10 in Höhenrichtung R_{H} unterhalb des Schwerpunkts des Hohlglases 10 angeordnet ist und in Förderrichtung R_{F} vorwärts bewegt wird, insbesondere schneller als das Förderband 20 in Förderrichtung R_{F} vorwärts bewegt wird. Daneben bestehen weitere Möglichkeiten ein Kippen eines Hohlglases 10 in Förderrichtung R_{F} rückwärts zu bewirken, wie beispielsweise durch ein Führen mittels mehrerer Stäbe, Greifer oder auch durch eine Stoßbewegung eines Umorientierungselements 52.

In Figur 3 ist beispielhaft ein mittels der Umorientierungseinrichtung 50 in Förderrichtung R_{F} vorwärts gekipptes Hohlglas 10 dargestellt. Durch die Umorientierung, wie beispielsweise Kippen, eines Hohlglases 10 oder mehrerer Hohlgläser 10 können die Hohlgläser 10 beispielsweise mit verschiedener Orientierung zur Führungseinrichtung 30 gefördert werden. Das Fördern von Hohlgläsern 10 mit unterschiedlicher Orientierung zur Führungseinrichtung 30 ermöglicht beispielhaft, dass Hohlgläser 10 mit verschiedener Orientierung in die Verpackung 40 gleitend geführt werden, so dass die Hohlgläser 10 beispielsweise mit verschiedener Orientierung in der Verpackung 40 verweilen können. Das Fördern von Hohlgläsern 10 mit unterschiedlicher Orientierung zur Führungseinrichtung 30 ermöglicht darüber hinaus beispielhaft, dass Hohlgläser 10 nur mit einer bestimmten Orientierung der verschiedenen Orientierungen in die Führungseinrichtung 30 gelangen und von dieser gleitend in die Verpackung 40 geführt werden. Insbesondere kann die Eingangsöffnung 31 der Führungseinrichtung 30 konfiguriert sein, dass nur Hohlgläser 10 mit einer bestimmten Orientierung in die Führungseinrichtung gelangen, um von dieser gleitend in die Verpackung 40 geführt zu werden.

Somit ermöglicht ein Umorientierungsschritt mittels einer Umorientierungseinrichtung 50, dass Hohlgläser 10 beispielsweise enger zueinander in eine Verpackung 40 geführt werden können, indem Hohlgläser 10 beispielsweise abwechselnd mit einem Hohlglasboden 14 voraus und mit einem Hohlglasrand 12 voraus in die Verpackung 40 geführt werden.

In beispielhaften Ausführungsformen und wie in Figur 3 angedeutet, kann die Verpackung 40 ohne explizit voneinander getrennte Verpackungsplätze 42 ausgestattet sein, sondern vielmehr einen einzelnen Verpackungsraum aufweisen, so dass weiterhin ein möglichst enges Verpacken mehrerer Hohlgläser 10 in einer Verpackung 40 ermöglicht wird.

Weiterhin ermöglicht der Umorientierungsschritt mittels der Umorientierungseinrichtung 50, dass Hohlgläser 10 beispielsweise sortiert werden können, indem Hohlgläser 10 nur mit einer bestimmten Orientierung in die Führungseinrichtung 30 gelangen, wodurch Hohlgläser 10 beispielsweise nach qualitativen Unterschieden sortiert und entsprechend verpackt werden können, wie beispielsweise zur Trennung von erster und zweiter Wahl von Hohlgläsern 10.

Wie weiterhin in Figur 3 gezeigt, kann die Umorientierungseinrichtung 50 eine Erkennungseinheit 54 aufweisen, wie beispielsweise eine optische Scaneinheit. Mittels der Erkennungseinheit 54 ermöglicht die Umorientierungseinrichtung 50 das Erkennen eines Hohlglases 10, welches zur Umorientierungseinrichtung 50 gefördert wird, so dass das Umorientierungselement 52 entsprechend gesteuert werden kann. Weiterhin kann die Erkennungseinheit 54 konfiguriert sein Hohlgläser 10 mit einem Defekt bzw. einem Defekt vordefinierter Größe zu erkennen, so dass auf Basis eines erkannten Defekts das betreffende Hohlglas 10 umorientert bzw. gekippt wird.

In beispielhaften Ausführungsformen kann eine Sortiereinrichtung 70 der Umorientierungseinrichtung 50 in Förderrichtung R_{F} vorgeschaltet sein, nachgeschaltet sein, oder auch in die Umorientierungseinrichtung 50 integriert sein, so dass Hohlgläser 10 beispielsweise auf ein weiteres Förderband 20 geleitet werden, in einen Ausschuss gelangen, oder auf dem Förderband 20 zueinander ausgerichtet werden. Beispielsweise können Hohlgläser 10 mittels einer Sortiereinrichtung 70 in Zusammenarbeit mit einer Umorientierungseinrichtung 50 in Querrichtung R_{Q} nebeneinander angeordnet auf das Förderband 20 abgelegt werden und dadurch nebeneinander zu einer oder mehreren Führungseinrichtungen 30 gefördert werden.

Wie durch die vorstehenden Erläuterungen zur Figur 3 verdeutlicht, wird mittels des Umorientierungsschritts bzw. der Umorientierungseinrichtung 50 zusätzlich ermöglicht eine besonders einfache, ressourcenschonende und gleichzeitig sichere, schnelle und platzsparende Verpackung einer Vielzahl von Hohlgläsern 10 zu realisieren, welche sich insbesondere für die Massenproduktion, wie beispielhaft von Trinkgläsern, eignet.

Wie weiterhin in Figur 3 gezeigt, kann die Längsachse 39 der Führungseinrichtung 30 insbesondere im Wesentlichen geneigt gegenüber der Höhenrichtung R_{H} verlaufen. Beispielsweise kann die Längsachse 39 der Führungseinrichtung 30 in einer Ebene, welche durch die Höhenrichtung R_{H} und die Förderrichtung R_{F} aufgespannt ist, gegenüber der Höhenrichtung R_{H} geneigt sein, bzw. kann die Längsachse 39 der Führungseinrichtung 30 um die Querrichtung R_{Q} rotiert zur Höhenrichtung R_{H} geneigt sein. Weiterhin beispielsweise kann die Längsachse 39 der Führungseinrichtung 30 in einer Ebene, welche durch die Höhenrichtung R_{H} und die Querrichtung R_{Q} aufgespannt ist, gegenüber der Höhenrichtung R_{H} geneigt sein, bzw. kann die Längsachse 39 der Führungseinrichtung 30 um die Förderrichtung R_{F} rotiert zur Höhenrichtung R_{H} geneigt sein. In beispielhaften Ausführungsformen kann die Längsachse 39 der Führungseinrichtung 30 sowohl um die Förderrichtung R_{F} rotiert, als auch um die Querrichtung R_{Q} rotiert, gegenüber der Höhenrichtung R_{H} geneigt sein. In weiteren beispielhaften Ausführungsformen kann die Längsachse 39 der Führungseinrichtung 30 im Wesentlichen in einem Abschnitt der Führungseinrichtung 30, welcher der Verpackung 40 zugewandt ist, insbesondere im Wesentlichen geneigt gegenüber der Höhenrichtung R_{H} verlaufen bzw. schräg zu einer Öffnung der Verpackung 40 verlaufen.

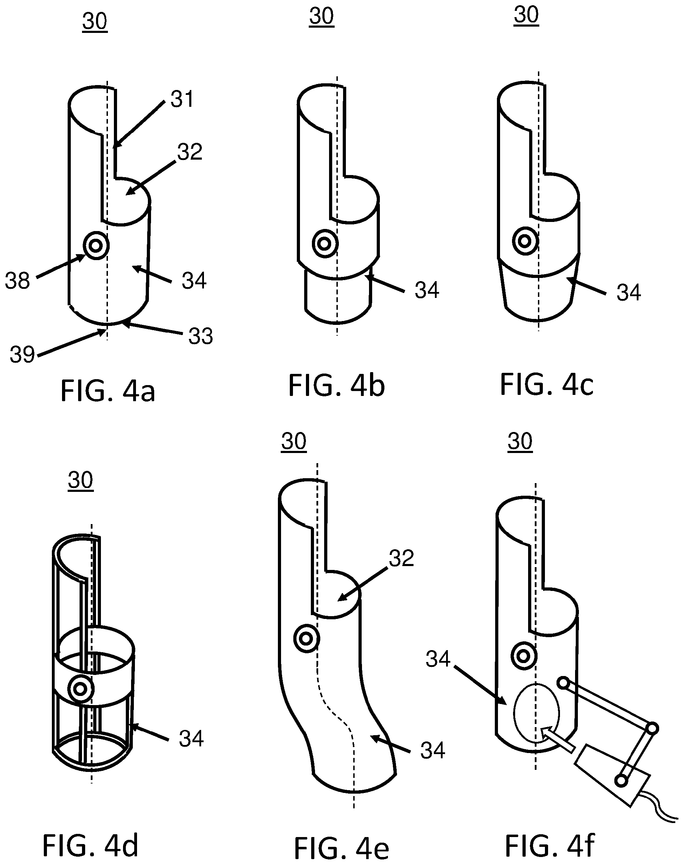

In den Figuren 4a bis 4f sind verschiedene beispielhafte Ausführungsformen von Führungseinrichtungen 30 schematisch dargestellt, wobei in den Figuren 4a bis 4f jeweils unterschiedliche Elemente herausgestellt werden. Es wird betont, dass die in den Figuren 4a bis 4f wenngleich einzeln dargestellten Elemente nicht auf die damit verbundene Figur beschränkt sind, sondern vielmehr mit den Elementen gemäß der anderen Figuren kombiniert werden können.

Figur 4a zeigt eine beispielhafte Führungseinrichtung 30, welche im Wesentlichen rohrförmig konfiguriert ist, insbesondere im Wesentlichen als rundes Rohr konfiguriert ist. Die Führungseinrichtung 30 gemäß Figur 4a weist dabei eine Eingangsöffnung 31 auf, welche konfiguriert ist das Fördern eines Hohlglases 10 in die Führungseinrichtung 30 zu ermöglichen, so dass das Hohlglas 10 von der Führungseinrichtung 30 gleitend geführt werden kann. Die Eingangsöffnung 31 der Führungseinrichtung 30 kann unterschiedlich geformt bzw. dimensioniert sein, insbesondere in Abhängigkeit des zu Führenden Hohlglases 10 unterschiedlich geformt bzw. dimensioniert sein. Figur 4a zeigt beispielhaft eine Eingangsöffnung 31, welche einer Öffnung als Teil der Umfangswand der Führungseinrichtung 30 gebildet ist. In beispielhaften Ausführungsformen kann die Eingangsöffnung 31 als stirnseitige Öffnung ausgebildet sein, so dass die Führungseinrichtung 30 mit einer über den Umfang durchgängigen Umfangswand gebildet ist.

Die Führungseinrichtung 30 kann insbesondere eine oder mehrere Gleitflächen 32 aufweisen. Eine Gleitfläche 32 kann insbesondere an einer Innenumfangsseite der Führungseinrichtung 30 ausgebildet bzw. angeordnet sein. Die Gleitfläche 32 weist eine vorbestimmte Oberfläche bzw. ein vorbestimmtes Material auf, so dass eine gezielte zumindest abschnittsweise Gleitreibung zwischen dem Hohlglas 10 und der Führungseinrichtung 30 eingestellt werden kann, wobei gleichzeitig insbesondere ein Zerkratzen der Hohlgläser 10 beim gleitenden Führen durch die Führungseinrichtung 30 vermieden werden kann.

Weiterhin kann die Führungseinrichtung 30 eine Führungsanbindung 38 aufweisen, um die Führungseinrichtung 30 im Bereich des Abwurfendes 22 des Förderbands 20 anzuordnen bzw. zu fixieren und je nach Ausführungsform die Führungseinrichtung 30 zu bewegen. In beispielhaften Ausführungsformen kann die Führungseinrichtung 30 eine Vielzahl von Führungsanbindungen 38 aufweisen, um die Führungseinrichtung 30 in einer gewünschten Position im Bereich des Abwurfendes 22 zu positionieren und bewegen zu können.

Die Führungseinrichtung 30 weist weiterhin einen Führungsabschnitt 34 auf, der im Wesentlichen die Kontur der Führungseinrichtung 30 beschreibt, insbesondere die Kontur der Führungseinrichtung 30 hin zur Verpackung 40 beschreibt. Wie in Figur 4 gezeigt, kann der Führungsabschnitt 34 im Wesentlichen zylinderförmig konfiguriert sein. In beispielhaften Ausführungsformen, kann der Führungsabschnitt auch eine vieleckige Form, pyramidal, konisch, einfach oder mehrfach verjüngt geformt sein, mit Nuten und/oder Rippen versehen sein, oder eine sonstige Form aufweisen, die dazu geeignet ist ein Hohlglas 10 gleitend in eine Verpackung 40 zu führen.

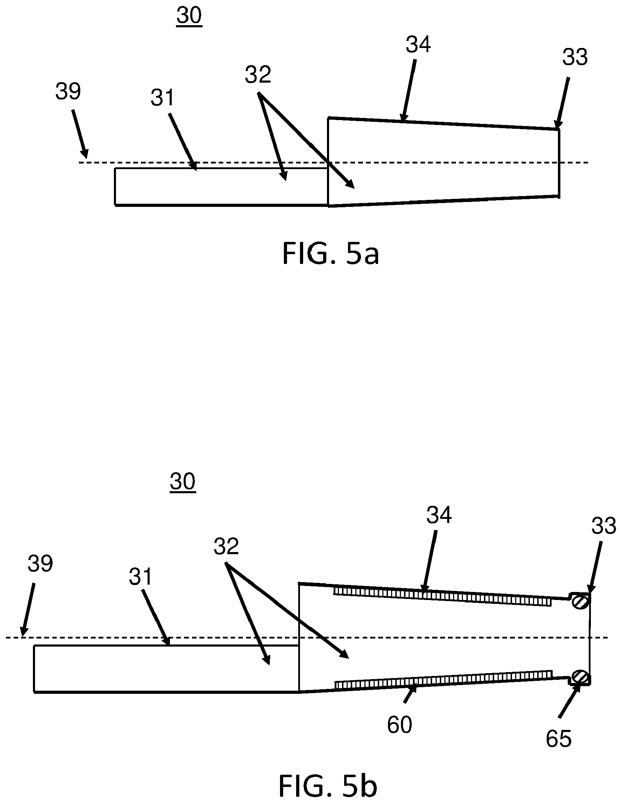

Weiterhin weist die Führungseinrichtung 30 einen Führungsendabschnitt 33 auf, welcher entlang einer Längsachse 39 der Führungseinrichtung 30 die letzten 0,1 bis 5 cm der Führungseinrichtung 30 beschreibt, bevor das Hohlglas 10 die Führungseinrichtung 30 verlässt. Beispielsweise Ausgestaltungen des Führungsendabschnitts 33 sind mit Bezug auf Figur 5b beschrieben.

Wie in Figur 4b gezeigt, kann der Führungsabschnitt 34 beispielhaft eine abgesetzte Kontur aufweisen. Insbesondere kann der Führungsabschnitt 34 eine radial abgesetzte Kontur aufweisen. Dabei kann der Führungsabschnitt 34 einen ersten Abschnitt aufweisen, welcher dem Abwurfende 22 zugewandt ist und einen ersten Durchmesser aufweist, und einen zweiten Abschnitt aufweisen, welcher der Verpackung zugewandt ist und einen zweiten Durchmesser aufweist, der kleiner ist als der erste Durchmesser.

Durch die abgesetzte Kontur des Führungsabschnitts 34, mit einer Verengung hin zur Verpackung, wird ermöglicht, dass das Hohlglas 10 beim gleitenden Führen durch die Führungseinrichtung 30 hin zur Verpackung 40 genauer geführt werden kann. Weiterhin wird ermöglicht, dass die Gleitreibung zwischen Hohlglas 10 und Führungseinrichtung 30 zunimmt, so dass das Hohlglas 10 während dem gleitenden Führen abgebremst werden kann.

Wie in Figur 4c gezeigt, kann der Führungsabschnitt 34 beispielhaft abschnittsweise eine kontinuierlich verjüngende Kontur aufweisen. Insbesondere kann der Führungsabschnitt 34 eine sich radial verjüngende Kontur aufweisen. Dabei kann der Führungsabschnitt 34 einen ersten Abschnitt aufweisen, welcher dem Abwurfende 22 zugewandt ist und einen ersten Durchmesser aufweist, und einen zweiten Abschnitt aufweisen, welcher der Verpackung zugewandt ist und sich gegenüber dem ersten Durchmesser kontinuierlich verjüngende Kontur aufweisen.

Durch die sich verjüngende Kontur des Führungsabschnitts 34, mit einer Verengung hin zur Verpackung, wird ermöglicht, dass das Hohlglas 10 beim gleitenden Führen durch die Führungseinrichtung 30 hin zur Verpackung 40 genauer geführt werden kann. Weiterhin wird ermöglicht, dass die Gleitreibung zwischen Hohlglas 10 und Führungseinrichtung 30 gezielt zunimmt, so dass das Hohlglas 10 während dem gleitenden Führen besonders gezielt abgebremst werden kann.

In weiteren beispielhaften Ausführungsformen kann der Führungsabschnitt 34 eine Mehrzahl von Verengungen gemäß der Figuren 4b und 4c aufweisen, wie beispielsweise 2, 3 oder 4 solcher Verengungen.

Wie in Figur 4d gezeigt, kann die Führungseinrichtung 30 und insbesondere der Führungsabschnitt 34 gitterförmig bzw. schienenähnlich konfiguriert sein. Hierzu können einzelne Gitterelemente bzw. Schienenelemente im Wesentlichen entlang der Längsachse 39 der Führungseinrichtung 30 verlaufen und abschnittsweise mittels einem oder mehrerer Umfangselemente in Umfangsrichtung verbunden werden. Dabei kann insbesondere die Führungsanbindung 38 an einem Umfangselement angeordnet sein.

Die Führungseinrichtung 30 kann über den Umfang verteilt mehrere Gitterelemente bzw. Schienenelemente aufweisen, wie beispielsweise 1, 2, 3, 4, 5, 6, 7, 8 oder mehr Gitterelemente bzw. Schienenelemente.

Indem die Führungseinrichtung 30 und insbesondere der Führungsabschnitt 34 durch mehrere Gitterelemente bzw. Schienenelemente gebildet ist, besteht die Möglichkeit auf besonders einfache Weise das gleitende Führen der Hohlgläser 10 in die Verpackung 40 visuell zu kontrollieren.

Wie in Figur 4e gezeigt, kann die Führungseinrichtung 30 bzw. der Führungsabschnitt 34 beispielhaft entlang der Längsachse 39 einfach oder mehrfach gekrümmt sein. Durch die einfache oder mehrfache Krümmung der Führungseinrichtung 30 bzw. des Führungsabschnitts 34 wird ermöglicht, dass das Hohlglas 10 beim gleitenden Führen gegen eine vorbestimmte Gleitfläche 32 gedrückt wird, so dass eine gezielte Aufbringung einer Gleitreibung zwischen Hohlglas 10 und Führungseinrichtung 30 ermöglicht wird.

Wie in Figur 4f gezeigt, kann die Führungseinrichtung 30 bzw. der Führungsabschnitt 34 beispielhaft eine Lufteinlassöffnung aufweisen, so dass mittels einer Luftzufuhreinrichtung, welche an der Führungseinrichtung 30 angeordnet ist, ein Luftstrom durch die Lufteinlassöffnung geblasen werden kann, um eine bremsende Wirkung beim gleitenden Führen eines Hohlglases 10 zu bewirken.

Die Figuren 4a bis 4f zeigen somit verschiedene beispielhafte Möglichkeiten zur Konfiguration der Führungseinrichtung 30, welche beliebig miteinander kombiniert werden können.

Obwohl viele der beispielhaften Konfigurationen der Führungseinrichtung 30, wie in den Figuren 4b bis 4f gezeigt, unter anderem ein gezieltes Abbremsen oder Beeinflussen des gleitenden Führens des Hohlglases 10 durch die Führungseinrichtung 30 erlauben, wird betont, dass diese beispielhaften Konfigurationen im Wesentlichen Optimierungsmöglichkeiten aufzeigen. Die vorliegende Erfindung zum zuverlässigen und schnellen Verpacken von Hohlgläsern 10 kann bereits mit einer Führungseinrichtung 30 gemäß der Figuren 1 und 4a realisiert werden.

In Figur 5a ist eine Schnittdarstellung einer beispielhaften Führungseinrichtung 30 gezeigt. Die Schnittdarstellung ist angelehnt an eine Ausführungsform der Führungseinrichtung 30 gemäß Figur 4c, wobei gemäß Figur 5a der Führungsabschnitt 34 eine durchgängig kontinuierlich verjüngten Abschnitt aufweist, der sich vom Bereich der Eingangsöffnung 31 weg erstreckt. Die Schnittebene für die Schnittdarstellung in Figur 5a entspricht einer Ebene, welche sich im Wesentlichen in Höhenrichtung R_{H} und Förderrichtung R_{F}, wie in Figur 1 dargestellt, aufspannt.

Wie in Figur 5a dargestellt, können beispielhafte Ausführungsformen ohne zusätzliche polsternde oder bremsende Elemente auskommen.

Figur 5b zeigt eine Schnittdarstellung einer beispielhaften Führungseinrichtung 30 ähnlich zu Figur 5a, wobei der Führungsendabschnitt 33 eine gegenüber des Führungsabschnitts 34 rückspringende Kontur aufweist. Mit anderen Worten kann die Führungseinrichtung 30 eine Kontur aufweisen, die sich am Führungsendabschnitt 33 radial nach außen erweitert. Der rückspringende Führungsendabschnitt 33 bzw. der sich radial nach außen erweiternde Führungsendabschnitt 33 ermöglichen die Anordnung eines Bremselements 65, wie beispielsweise eines Gummirings, im Bereich des Endabschnitts 33.

Durch die Anordnung eines Bremselements 65 im Bereich des Endabschnitts 33 bzw. in einer radialen Nut, welche an einer Innenumfangsseite der Führungseinrichtung 30 durch den Endabschnitt 33 gebildet ist, wird ein gezieltes Abbremsen eines Hohlglases 10 beim gleitenden Führen in die Verpackung 40 ermöglicht, indem das gleitend geführte Hohlglas 10 das Bremselement 65 zumindest abschnittsweise kontaktiert.

Wie weiterhin in Fig. 5b gezeigt, können die einen oder mehreren Gleitflächen 32 der Führungseinrichtung 30 mit einem oder mehreren Polsterungselementen 34 versehen sein. Polsterungselemente 34 können beispielsweise Filze oder andere Stoffe sein, welche ein Verkratzen von Hohlgläsern 10 beim gleitenden Führen verhindern und/oder die Festlegung einer bestimmten Gleitreibung zwischen Hohlglas 10 und Führungseinrichtung 30 erlauben.

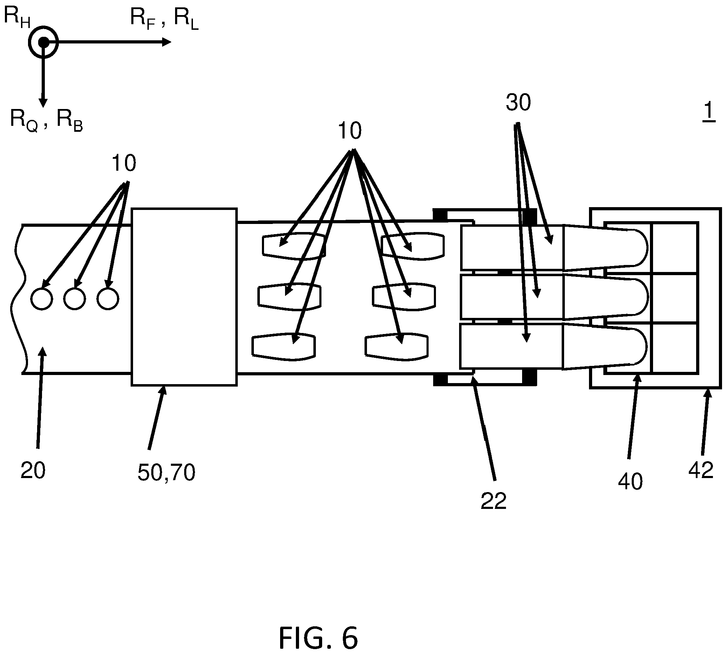

In Figur 6 ist beispielhaft eine weitere Ausführungsform des Verpackungssystems 1 in Draufsicht dargestellt. Wie in Figur 6 gezeigt, werden die Hohlgläser 10 auf einem Förderband 20 gefördert und passieren dabei der Förderrichtung R_{F} folgend eine Umorientierungseinrichtung 50 und eine Sortiereinrichtung 70, so dass nach dem Passieren der Umorientierungseinrichtung 50 und der Sortiereinrichtung 70 die Hohlgläser 10 in einer Querrichtung R_{Q} nebeneinander liegend angeordnet sind. Die Mehrzahl nebeneinander liegender Hohlgläser 10 kann danach beispielhaft durch eine entsprechende Mehrzahl von Führungseinrichtungen 30 von einem Bereich des Abwurfendes 22 des Förderbands 20 gleitend in die Verpackung 40 geführt werden.

In beispielhaften Ausführungsformen kann, nach gleitenden Führen der einen Mehrzahl von Hohlgläsern 10 in die Verpackung 40, die Verpackung 40 entgegen der Förderrichtung R_{F} bzw. entgegen der Längsrichtung RL bewegt werden, um danach eine weitere Mehrzahl von Hohlgläsern 10 gleitend in die Verpackung 40 zu führen.

Wie in Figur 6 gezeigt, kann eine beispielhafte Ausführungsform des Verpackungssystems 1 mit einer Mehrzahl von Führungseinrichtungen 30 ausgestattet sein. Durch die Anordnung einer Mehrzahl von Führungseinrichtungen 30 an dem Verpackungssystem 1, wird eine besonders schnelle und zuverlässige Verpackung von Hohlgläsern 10 zu ermöglicht.

### Bezugszeichenliste

- 1: Verpackungssystem
- 10: Hohlglas
- 12: Hohlglasrand
- 14: Hohlglasboden
- 16: Hohlglaswandabschnitt
- 20: Förderband
- 22: Abwurfende
- 30: Führungseinrichtung
- 31: Eingangsöffnung
- 32: Gleitfläche
- 33: Führungsendabschnitt
- 34: Führungsabschnitt
- 38: Führungsanbindung
- 39: Längsachse der Führungseinrichtung
- 40: Verpackung
- 42: Verpackungsplatz
- 44: Verpackungsstelle
- 50: Umorientierungseinrichtung
- 52: Umorientierungselement
- 53: Höhenverstellung
- 54: Erkennungseinheit
- 60: Polsterungselementen
- 65: Bremselement
- 70: Sortiereinrichtung
- R_{F}: Förderrichtung
- R_{B}: Breitenrichtung
- R_{H}: Höhenrichtung
- R_{L}: Längsrichtung
- R_{Q}: Querrichtung
- S10-S60: Schritte eines Verfahrens zum Verpacken von Hohlgläsern

## Patentansprüche

1. Verfahren zum Verpacken von Hohlgläsern (10), umfassend die Schritte:
Bereitstellen einer Verpackung (40);
Fördern zumindest eines Hohlglases (10) auf einem Förderband (20) hin zu einem Abwurfende (22) des Förderbandes (20); und
gleitendes Führen des zumindest einen Hohlglases (10) durch eine Führungseinrichtung (30) von dem Abwurfende (22) in die Verpackung.

2. Verfahren zum Verpacken von Hohlgläsern (10) nach Anspruch 1, wobei die Verpackung (40) eine Mehrzahl von Verpackungsplätzen (42) für eine entsprechende Mehrzahl von Hohlgläsern (10) aufweist,
wobei die Führungseinrichtung (30) und/oder die Verpackung (40) bewegbar sind, und
wobei nach dem gleitenden Führen eines Hohlglases (10) in die Verpackung (40) und vor dem gleitenden Führen eines weiteren Hohlglases (10) in die Verpackung (40) zumindest eines von der Führungseinrichtung (30) und der Verpackung (40) relativ zum Abwurfende (22) des Förderbandes (20) bewegt wird.

3. Verfahren zum Verpacken von Hohlgläsern (10) nach Anspruch 2, wobei nach dem gleitenden Führen eines Hohlglases (10) in die Verpackung (40) und vor dem gleitenden Führen eines weiteren Hohlglases (10) in die Verpackung (40),
wobei bis zu einem Zustand in dem die Verpackungsplätze (42) in Breitenrichtung (R_{B}) mit Hohlgläsern (10) besetzt sind, die Führungseinrichtung (30) relativ zum Abwurfende (22) in einer Breitenrichtung (R_{B}) des Abwurfendes (22) bewegt wird, und
wobei ab einem Zustand in dem die Verpackungsplätze (42) in Breitenrichtung (R_{B}) mit Hohlgläsern (10) besetzt sind, die Verpackung (40) in Förderrichtung (R_{F}) des Förderbandes (20) relativ zum Abwurfende (22) bewegt wird.

4. Verfahren zum Verpacken von Hohlgläsern (10) nach einem der vorhergehenden Ansprüche, umfassend einen Umorientierungsschritt vor dem gleitenden Führen, um zumindest einige der Hohlgläser (10) zu kippen.

5. Verfahren zum Verpacken von Hohlgläsern (10) nach Anspruch 4, wobei die Hohlgläser (10) abwechselnd gekippt und nicht-gekippt zum Schritt des gleitenden Führens gefördert werden.

6. Verfahren zum Verpacken von Hohlgläsern (10) nach Anspruch 4 oder 5, wobei im Umorientierungsschritt die Hohlgläser (10), welche gekippt werden, durch einen Kontakt mit einem Querelement (52) oberhalb eines Schwerpunkts des jeweiligen Hohlglases (10) gekippt werden.

7. Verfahren zum Verpacken nach einem der vorhergehenden Ansprüche, wobei mehrere Führungseinrichtungen (30) im Bereich des Abwurfendes (22) angeordnet sind, so dass entsprechend mehrere Hohlgläser (10) in Breitenrichtung (R_{B}) nebeneinander gleitend in die Verpackung (40) geführt werden.

8. Verfahren zum Verpacken nach einem der vorhergehenden Ansprüche, wobei die Führungseinrichtung (30):
zumindest ein Führungsrohr umfasst, dessen Längsachse (39) abschnittsweise gekrümmt ist; und/oder
zumindest ein Rohrsegment umfasst, welches keinen geschlossenen Umfang aufweist und dessen Längsachse abschnittsweise gekrümmt ist; und/oder
zumindest ein Paar von Führungsschienen umfasst, welche wahlweise abschnittsweise gekrümmt ist.

9. Verfahren zum Verpacken von Hohlgläsern nach einem der vorhergehenden Ansprüche, wobei die Führungseinrichtung (30):
einen Filzabschnitt (60) aufweist; und/oder
einen Gummiabschnitt (65) aufweist; und/oder
eine Luftzufuhreinrichtung aufweist, die konfiguriert ist einen Luftstrom zu bewirken, der auf ein gleitend geführtes Hohlglas (10) trifft und das Hohlglas (10) abbremst.

10. Verpackungssystem (1) zur Verpackung von Hohlgläsern (10), umfassend:
- ein Förderband (20), wobei das Förderband (20) konfiguriert ist zumindest ein Hohlglas (10) zu einem Abwurfende (22) des Förderbandes (20) zu fördern;
- eine Verpackungsstelle (44), wobei die Verpackungsstelle (44) konfiguriert ist eine Verpackung (40) bereitzustellen; und
- eine Führungseinrichtung (30), welche konfiguriert ist das zumindest eine Hohlglas (10) gleitend vom Abwurfende (22) des Förderbandes (20) in die Verpackung (40) zu führen.
